# EUROPEAN PATENT SPECIFICATION

(11) **EP 3 828 337 B1**
(45) Date of publication and mention of the grant of the patent: **06.11.2024**
(21) Application number: 20210225.7
(22) Date of filing: 27.11.2020
(51) Int. Cl.: D21F 9/00, D04H 1/26, D04H 1/4274, D04H 1/58, D04H 1/732, D04H 1/736

(54) **FIBER ASSEMBLY-FORMING METHOD AND FIBER ASSEMBLY-FORMING APPARATUS**
VERFAHREN UND VORRICHTUNG ZUR HERSTELLUNG VON FASERVERBINDUNGEN UND BOGEN
PROCÉDÉ DE FORMATION D'UN ASSEMBLAGE DE FIBRES ET APPAREIL DE FORMATION D'UN ASSEMBLAGE DE FIBRES

(30) Priority: 29.11.2019 JP 2019216462
(43) Date of publication of application: 02.06.2021
(73) Proprietor: Seiko Epson Corporation, Tokyo 160-8801 (JP)
(72) Inventor: AOYAMA, Tetsuya, Suwa-shi Nagano 392-8502 (JP); WAKABAYASHI, Shigemi, Suwa-shi Nagano 392-8502 (JP); YOKOKAWA, Shinobu, Suwa-shi Nagano 392-8502 (JP); NAKAI, Yoko, Suwa-shi Nagano 392-8502 (JP); NAKAZAWA, Masahiko, Suwa-shi Nagano 392-8502 (JP)
(74) Representative: Lewis Silkin LLP

(56) References cited:
- EP-A1- 2 664 708
- EP-A1- 3 281 756

## Description

### BACKGROUND

### 1. Technical Field

The present disclosure relates to a fiber assembly-forming method, a fiber assembly-forming apparatus, and a sheet.

### 2. Related Art

Dry fiber assembly-forming apparatuses using substantially no water for the purpose of size reduction and energy saving have been proposed. For example, JP-A-2012-144826 describes that, in a dry paper recycling apparatus, the paper strength is increased in such a manner that water containing a paper strength additive such as starch or polyvinyl alcohol (PVA) is sprayed from a water sprayer on deposits of deinked fibers deposited on a mesh belt.

However, in the manner described in JP-A-2012-144826, while the deposits of the fibers are being transported on the mesh belt, the fibers rise from the mesh belt in the form of paper dust to clog nozzles of the water sprayer in some cases. Therefore, it is difficult to uniformly spray the paper strength additive on the deposits and formed paper is variable in strength.

EP 3281756 discloses a sheet manufacturing apparatus having a defibrating unit configured to defibrate, in air, feedstock containing fiber, and a mixing unit configured to mix, in air, resin with the fiber defibrated from the feedstock by the defibrating unit. The apparatus also has an air-laying unit configured to lay a web from the mixture output from the mixing unit, a wetting unit configured to add water to part of the web laid by the air-laying unit, and a sheet forming unit configured to form a sheet with parts having different light transmittance by heating and compressing the web to which water was added by the wetting unit.

### SUMMARY

According to an aspect of the present invention, a fiber assembly-forming method used in sheet forming according to claim 1 is provided.

According to another aspect of the present invention, a fiber assembly-forming apparatus used in sheet forming according to claim 7 is provided.

### BRIEF DESCRIPTION OF THE DRAWINGS

FIG. 1 is a schematic view of a fiber assembly-forming apparatus according to an embodiment of the present disclosure.
FIG. 2 is a flowchart illustrating a fiber assembly-forming method according to an embodiment of the present disclosure.
FIG. 3 is a flowchart illustrating the fiber assembly-forming method.
FIG. 4 is a flowchart illustrating the fiber assembly-forming method.
FIG. 5 is a flowchart illustrating a modification of the fiber assembly-forming method.
FIG. 6 is a flowchart illustrating the modification of the fiber assembly-forming method.
FIG. 7 is an illustration of a sheet used for evaluation.

### DESCRIPTION OF EXEMPLARY EMBODIMENTS

Preferred embodiments of the present disclosure will now be described in detail with reference to the accompanying drawings.

### 1. Fiber Assembly-Forming Apparatus

### 1.1. Overall Configuration

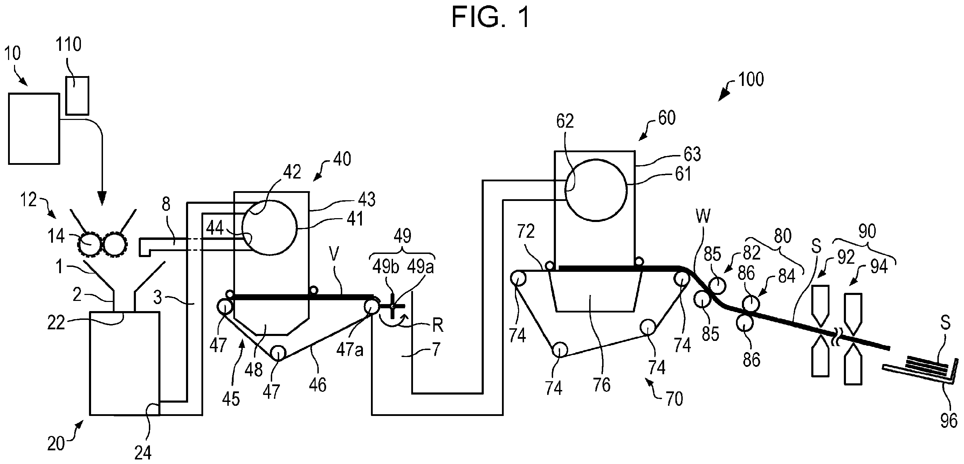

A fiber assembly-forming apparatus 100 according to an embodiment of the present disclosure is described with reference to a drawing. FIG. 1 is a schematic view of the fiber assembly-forming apparatus 100.

As shown in FIG. 1, the fiber assembly-forming apparatus 100 includes, for example, a supply section 10, a rough crushing section 12, a disintegration section 20, a screening section 40, a first web-forming section 45, a rotator 49, a deposition section 60, a second web-forming section 70, a sheet-forming section 80, a cutting section 90, and a provision section 110.

The supply section 10 supplies a feedstock to the rough crushing section 12. The supply section 10 is, for example, an automatic input section for continuously inputting the feedstock to the rough crushing section 12. The feedstock supplied by the supply section 10 contains, for example, fibers of waste paper, pulp sheets, or the like.

The provision section 110 provides the feedstock supplied from the supply section 10 with a binding material bonding the fibers to each other. Details of the provision section 110 are described below.

The rough crushing section 12 cuts the feedstock supplied by the supply section 10 into small pieces in gas such as air. The small pieces are, for example, several centimeters square pieces. In an illustrated example, the rough crushing section 12 includes rough crushing blades 14 and can cut the input feedstock with the rough crushing blades 14. The rough crushing section 12 used is, for example, a shredder. The feedstock cut by the rough crushing section 12 is received in a hopper 1 and is then transferred to the disintegration section 20 through a pipe 2.

The disintegration section 20 disintegrates the feedstock cut by the rough crushing section 12. The term "disintegrate" as used herein means that a feedstock containing a plurality of bonded fibers is disentangled into the fibers one by one. The disintegration section 20 has the function of removing substances, such as resin particles, ink, toner, and a bleeding inhibitor, adhering to the feedstock from fibers.

One having passed through the disintegration section 20 is referred to as "disintegrated matter". The "disintegrated matter" contains disentangled disintegrated fibers and also contains resin particles separated from fibers when the fibers are disintegrated, a colorant such as ink or toner, or an additive such as a bleeding inhibitor or a paper strength additive in some cases. Disentangled disintegrated matter is string-shaped. The disentangled disintegrated matter may be present in such a state that the disentangled disintegrated matter is not intertwined with other disentangled fibers, that is, such a state that the disentangled disintegrated matter is independent or in such a state that the disentangled disintegrated matter is intertwined with other disentangled fibers to form aggregates, that is, such a state that the disentangled disintegrated matter forms lumps.

The disintegration section 20 performs disintegration in a dry mode. Herein, performing treatment such as disintegration in gas, such as air, rather than liquid is referred to as a dry mode. The disintegration section 20 used is, for example, an impeller mill. The disintegration section 20 has the function of generating such an air flow that sucks the feedstock and discharges the disintegrated matter. This enables the disintegration section 20 to suck the feedstock from an inlet 22 by means of an air flow generated by the disintegration section 20 together with the air flow, to disintegrate the feedstock, and to transport the disintegrated matter to an outlet 24. The disintegrated matter having passed through the disintegration section 20 is transferred to the screening section 40 through a pipe 3. Incidentally, an air flow for transporting the disintegrated matter from the disintegration section 20 to the screening section 40 may be the air flow generated by the disintegration section 20 or an air flow generated by an air flow generator such as a blower.

The screening section 40 imports the disintegrated matter having passed through the disintegration section 20 from an inlet 42 and screens the disintegrated matter depending on the length of fibers. The screening section 40 includes a drum portion 41 and a housing portion 43 that houses the drum portion 41. The drum portion 41 used is, for example, a sieve. The drum portion 41 includes a net and can separate fibers or particles smaller than the size of openings of the net, that is, first screened fractions passing through the net, and fibers, undisintegrated pieces, or lumps larger than the size of the openings of the net, that is, second screened fractions not passing through the net. For example, the first screened fractions are transferred to the deposition section 60 through a pipe 7. The second screened fractions are returned to the disintegration section 20 from an outlet 44 through a pipe 8. In particular, the drum portion 41 is a cylindrical sieve rotationally driven with a motor. The net of the drum portion 41 used is, for example, a metal gauze, an expanded metal obtained by expanding a slit metal plate, or a punching metal obtained by forming holes in a metal plate with a press or the like.

The first web-forming section 45 transports the first screened fractions having passed through the screening section 40 to the pipe 7. The first web-forming section 45 includes a mesh belt 46, tension rollers 47, and a suction mechanism 48.

The suction mechanism 48 can suck the first screened fractions which have passed through openings of the screening section 40 and which have been distributed in air onto the mesh belt 46. The first screened fractions are deposited on the moving mesh belt 46 to form a web V. The basic configuration of the mesh belt 46, the tension rollers 47, and the suction mechanism 48 is substantially the same as that of a mesh belt 72, tension rollers 74, and suction mechanism 76 of the second web-forming section 70 as described below.

The web V passes through the screening section 40 and the first web-forming section 45 and is thereby formed in such a state that the web V contains a lot of air, is soft, and is bulgy. The web V deposited on the mesh belt 46 is input to the pipe 7 and is transported to the deposition section 60.

The rotator 49 can cut the web V. In the illustrated example, the rotator 49 includes a base portion 49a and protruding portions 49b protruding from the base portion 49a. The protruding portions 49b have, for example, a plate shape. In the illustrated example, the number of the protruding portions 49b is four and the four protruding portions 49b are arranged at equal intervals. The base portion 49a rotates in a direction R and therefore the protruding portions 49b can rotate about the base portion 49a. Cutting the web V by the rotator 49 enables, for example, the change in amount of the disintegrated matter supplied to the deposition section 60 per unit time to be reduced.

The rotator 49 is placed in the vicinity of the first web-forming section 45. In the illustrated example, the rotator 49 is placed in the vicinity of a tension roller 47a located downstream in the path of the web V. The rotator 49 is placed at a position where the protruding portions 49b can come into contact with the web V and do not come into contact with the mesh belt 46, on which the web V is deposited. This enables the mesh belt 46 to be inhibited from being worn by the protruding portions 49b. The shortest distance between each protruding portion 49b and the mesh belt 46 is, for example, 0.05 mm to 0.5 mm. This is the distance that the web V can be cut without damaging the mesh belt 46.

The deposition section 60 imports the first screened fractions from an inlet 62, disentangles the intertwined disintegrated matter, and sprays the disentangled disintegrated matter such that the disentangled disintegrated matter is dispersed in air. The deposition section 60 can uniformly deposit the first screened fractions on the second web-forming section 70.

The deposition section 60 includes a drum portion 61 and a housing portion 63 that houses the drum portion 61. The drum portion 61 used is, for example, a rotary cylindrical sieve. The drum portion 61 includes a net and sprays fibers or particles smaller than the size of openings of the net. The configuration of the drum portion 61 is the same as, for example, the configuration of the drum portion 41.

Incidentally, the "sieve" of the drum portion 61 need not have the function of screening a specific target. That is, the "sieve" used as the drum portion 61 means one equipped with a net. The drum portion 61 may spray all of the disintegrated matter imported into the drum portion 61.

The second web-forming section 70 deposits a passing object having passed through the deposition section 60 to form a web W. The second web-forming section 70 includes, for example, a mesh belt 72, tension rollers 74, and a suction mechanism 76.

The mesh belt 72 allows the passing object having passed through an opening of the deposition section 60 to be deposited thereon while moving. The mesh belt 72 is tensioned by the tension rollers 74 and is configured such that the passing object is unlikely to pass through the mesh belt 72 and air passes through the mesh belt 72. The mesh belt 72 moves because the tension rollers 74 rotate. The passing object having passed through the deposition section 60 is deposited on the mesh belt 72 that is continuously moving, whereby the web W is formed on the mesh belt 72.

The suction mechanism 76 is placed under the mesh belt 72. The suction mechanism 76 can generate an air flow directed downward. The disintegrated matter dispersed in air by the deposition section 60 can be sucked onto the mesh belt 72 by the suction mechanism 76. This enables the discharge rate from the deposition section 60 to be increased. Furthermore, a down-flow can be formed in the fall path of the disintegrated matter by the suction mechanism 76, thereby enabling the disintegrated matter and an additive to be prevented from being intertwined during falling.

As described above, passing through the deposition section 60 and the second web-forming section 70 allows the web W to be formed in such a state that the web W contains a lot of air, is soft, and is bulgy. The web W deposited on the mesh belt 72 is transported to the sheet-forming section 80.

The sheet-forming section 80 pressurizes and heats the web W deposited on the mesh belt 72 to form a sheet S. In the sheet-forming section 80, heat is applied to a mixture of the disintegrated matter and binding material mixed together in the web W, thereby enabling a plurality of fibers in the mixture to be bonded to each other with the binding material.

The sheet-forming section 80 includes a pressurizing portion 82 pressurizing the web W and a heating portion 84 heating the web W pressurized by the pressurizing portion 82. The pressurizing portion 82 is composed of a pair of calender rollers 85 and applies a pressure to the web W. Pressurizing the web W reduces the thickness of the web W and increases the bulk density of the web W. The heating portion 84 used is, for example, a heating roller, a hot press molding machine, a hotplate, a hot air blower, an infrared heater, or a flash-fusing system. In the illustrated example, the heating portion 84 includes a pair of heating rollers 86. Composing the heating portion 84 using the heating rollers 86, rather than composing the heating portion 84 as a plate-like press machine, enables the sheet S to be formed in such a manner that the web W is continuously transported. The calender rollers 85 and the heating rollers 86 are arranged such that, for example, the axes of rotation thereof are parallel. The calender rollers 85 can apply a higher pressure to the web W than the pressure applied to the web W by the heating rollers 86. The number of the calender rollers 85 and the heating rollers 86 is not particularly limited.

The cutting section 90 cuts the sheet S formed by the sheet-forming section 80. In the illustrated example, the cutting section 90 includes a first cutting portion 92 cutting the sheet S in a direction crossing the transport direction of the sheet S and a second cutting portion 94 cutting the sheet S in a direction parallel to the transport direction thereof. The second cutting portion 94 cuts the sheet S having passed through, for example, the first cutting portion 92.

The above allows the sheet S to be formed such that the sheet S is a single sheet with a predetermined size. The cut sheet S, which is such a single sheet, is discharged to a discharge section 96.

### 1.2. Provision Section

The provision section 110 provides the feedstock, which contains the fibers, with the binding material, which bonds the fibers to each other. The feedstock, which contains the fibers, is, for example, waste paper. In the illustrated example, the provision section 110 provides the feedstock which is supplied from the supply section 10 and which is roughly uncrushed by the rough crushing section 12 with the binding material. The length of the fibers contained in the feedstock is, for example, 0.6 mm to 3.0 mm as length-weighted mean length. The length-weighted mean length of the fibers can be measured in accordance with ISO 16065-2:2007 using L&W Fiber Tester CODE 912.

The provision section 110 may apply liquid containing the binding material to a surface of the feedstock. The provision section 110 may include a roller applying the binding material to the feedstock. Alternatively, the provision section 110 may include a spray discharging the binding material to the feedstock. Alternatively, the provision section 110 may be an inkjet head discharging the binding material to the feedstock.

The binding material, which is provided from the provision section 110, may be dissolved or dispersed in liquid. The liquid is preferably emulsion in which the binding material is dispersed. The binding material is preferably nano-sized. When the liquid is the emulsion, the viscosity of the liquid can be reduced, the liquid can penetrate to the inside of a fiber assembly, and the bonding force can be further enhanced, which is preferable. When the binding material is nano-sized, for example, nozzle clogging, which occurs in sprays and ink jet heads, is likely to be avoided, which is preferable.

The binding material, which is provided from the provision section 110, is, for example, a thermoplastic resin or a thermosetting resin.

Examples of the thermoplastic resin include an acrylonitrile-styrene (AS) resin, an acrylonitrile-butadiene-styrene (ABS) resin, polypropylene, polyethylene, polyvinyl chloride, polystyrene, an acrylic resin, a polyester resin, polyethylene terephthalate, polyphenylene ether, polybutylene terephthalate, nylon, polyamide, polycarbonate, polyacetal, polyphenylene sulfide, and polyether ether ketone. These resins may be used alone or in combination and may be copolymerized or modified. Examples of a family of these resins include styrenic resins, acrylic resins, styrene-acrylic copolymers, olefinic resins, vinyl chloride resins, polyester resins, polyamide resins, polyurethane resins, polyvinyl alcohol resins, vinyl ether resins, N-vinyl resins, and styrene-butadiene resins.

Examples of the thermosetting resin include a phenol resin, an epoxy resin, a melamine resin, a urea resin, an unsaturated polyester resin, an alkyd resin, polyurethane, and a thermosetting polyimide resin.

The glass transition temperature of the thermoplastic resin and the thermosetting resin is preferably high from the viewpoint of high-temperature resistance and is in an appropriate range in consideration of reasons such as energy saving in terms of manufacture. The glass transition temperature is appropriately selected depending on, for example, the thickness or heat treatment temperature of the sheet S. The glass transition temperature is preferably 45 °C or higher, more preferably 50 °C or higher, and further more preferably 60 °C or higher. The glass transition temperature is preferably 130 °C or less and more preferably 100 °C or lower. When the glass transition temperature is 45 °C or higher, the softening of the binding material at high temperature is suppressed and the obtained sheet S has high paper strength. Furthermore, when the glass transition temperature is 60 °C or higher, it can be suppressed that the binding material is softened by the heat of the disintegration section 20 to adhere to the disintegration section 20 in the course of disintegrating the feedstock provided with the binding material in the disintegration section 20. The binding material is preferably resin having a melting point higher than or equal to the temperature of the disintegration section 20. The melting point of the binding material is preferably 220 °C or lower.

The provision section 110 provides the feedstock with the binding material such that the binding material accounts for 6.0% by mass or more of the fibers contained in the feedstock, preferably 9.0% by mass or more. When the binding material accounts for 6.0% by mass or more of the fibers, the paper strength of the sheet S can be enhanced. The sheet S contains the binding material such that the binding material accounts for, for example, 6.0% by mass or more of the fibers.

The provision section 110 may provide the feedstock with an additive such as a flame retardant, a perfume, an antistatic agent, or an ultraviolet absorber in addition to the binding material. If the additive is provided from the provision section 110 together with the binding material, a cartridge for providing the additive need not be used. Therefore, the downsizing of an apparatus is possible. The provision section 110 does not provide the feedstock with any colorant.

When the feedstock is undisintegrated by the disintegration section 20, the provision section 110 may provide the feedstock roughly crushed by the rough crushing section 12 with the binding material. This is not shown. In this case, the provision section 110 is preferably a spray. In a case where the binding material is applied to the feedstock using a roller, the provision section 110 preferably provides the feedstock roughly uncrushed by the rough crushing section 12 with the binding material.

The provision section 110 may provide the binding material to the feedstock in the form of powder instead of the liquid containing the binding material. However, when the binding material is powder, the binding material is preferably fixed to the feedstock by heat for the purpose of suppressing the fall of the binding material from the feedstock. For example, the binding material may be charged into the disintegration section 20 such that the binding material is fixed to the feedstock by the heat of the disintegration section 20.

### 1.3. Effects

The fiber assembly-forming apparatus 100 has, for example, effects below.

The fiber assembly-forming apparatus 100 includes, the provision section 110, which provides the feedstock containing the fibers with the binding material bonding the fibers to each other; the disintegration section 20, which disintegrates the feedstock provided with the binding material to form the disintegrated matter; the deposition section 60, which deposits the disintegrated matter; and the heating portion 84, which heat the deposited disintegrated matter. Therefore, in the fiber assembly-forming apparatus 100, the binding material need not be provided to the disintegrated matter deposited by the deposition section 60 and therefore there is no possibility that the fibers rise from the mesh belt 46 in the form of paper dust to clog a nozzle of the provision section 110. Thus, the sheet S (fiber assembly) can be formed so as to have little variation in paper strength.

Furthermore, in the fiber assembly-forming apparatus 100, the disintegration section 20 has the function of mixing the feedstock and the binding material together. Therefore, even if the binding material is unevenly distributed at the point in time when the binding material is provided to the feedstock, the uneven distribution of the binding material can be reduced by the disintegration section 20 and the sheet S can be formed so as to have little variation in paper strength. Thus, if the nozzle of the provision section 110 is partly clogged, the binding material can be provided without regard to the unevenness of the binding material. Furthermore, since a mixing section mixing the feedstock and the binding material together is not necessary, the downsizing of an apparatus is possible.

In the fiber assembly-forming apparatus 100, the provision section 110 may include a roller applying the binding material to the feedstock. Therefore, in the fiber assembly-forming apparatus 100, the binding material can be uniformly applied to the feedstock. The roller can readily apply the binding material to the feedstock without consideration of the viscosity of the liquid containing the binding material as compared to sprays and ink jet heads.

In the fiber assembly-forming apparatus 100, the binding material may be the thermoplastic resin or the thermosetting resin and the glass transition temperature of the binding material may be 45 °C or higher. Therefore, in the fiber assembly-forming apparatus 100, the binding material can be readily melted by the heating portion 84.

### 2. Fiber Assembly-Forming Method

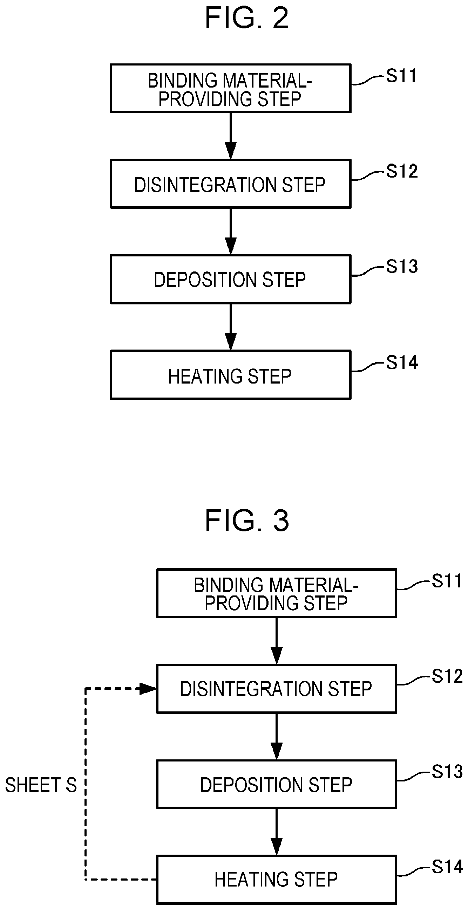

Next, a fiber assembly-forming method according to an embodiment of the present disclosure is described with reference to a drawing. FIG. 2 is a flowchart illustrating the fiber assembly-forming method.

The fiber assembly-forming method is performed using, for example, the above-mentioned fiber assembly-forming apparatus 100. The fiber assembly-forming method may be performed using an apparatus other than the fiber assembly-forming apparatus 100.

As shown in FIG. 2, the fiber assembly-forming method includes a binding material-providing step (Step S11) of providing a feedstock containing fibers with a binding material bonding the fibers to each other, a disintegration step (Step S12) of forming disintegrated matter by disintegrating the feedstock provided with the binding material, a deposition step (Step S13) of depositing the disintegrated matter, and a heating step (Step S14) of heating the deposited disintegrated matter.

The binding material-providing step (Step S11) is performed using, for example, the provision section 110 of the fiber assembly-forming apparatus 100.

The disintegration step (Step S12) is performed using, for example, the disintegration section 20 of the fiber assembly-forming apparatus 100.

The deposition step (Step S13) is performed using, for example, the deposition section 60 of the fiber assembly-forming apparatus 100.

The heating step (Step S14) is performed using, for example, the heating portion 84 of the fiber assembly-forming apparatus 100.

The fiber assembly-forming method may include, for example, a step such as a step of pressurizing the web W by the pressurizing portion 82 as described in above-mentioned "1. Fiber Assembly-Forming Apparatus" in addition to the above steps.

In the fiber assembly-forming method, the sheet S can be formed so as to have little variation in paper strength as described in above-mentioned "1. Fiber Assembly-Forming Apparatus".

In an example shown in FIG. 2, in the disintegration step, the feedstock provided with the binding material in the binding material-providing step is disintegrated. As shown in FIG. 3, in the disintegration step, the feedstock (first feedstock) provided with the binding material in the binding material-providing step and the sheet S formed through the heating step may be disintegrated. In an example shown in FIG. 3, the sheet S is a feedstock (second feedstock) on which no binding material providing step is performed between the heating step and the disintegration step. The disintegration section 20 may disintegrate the first feedstock and the second feedstock.

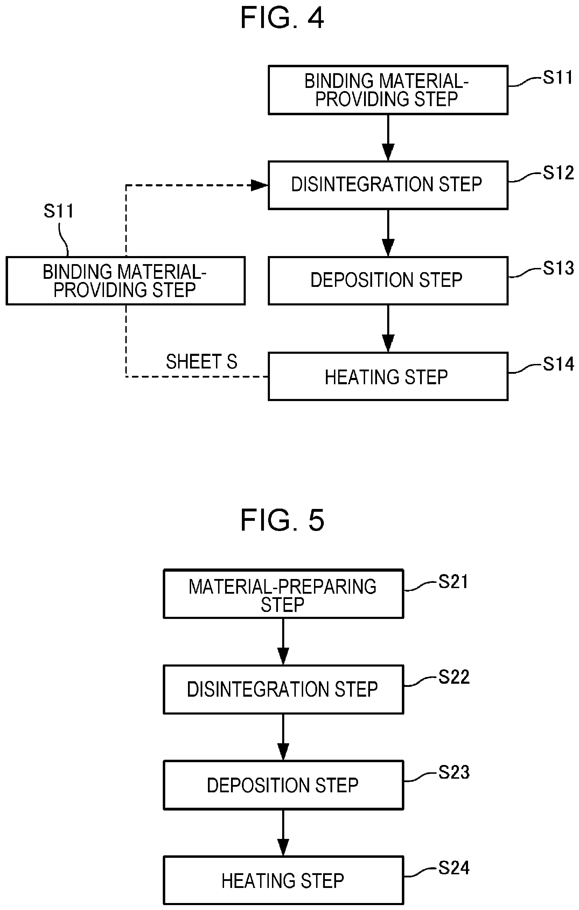

As shown in FIG. 4, in the disintegration step, the feedstock provided with the binding material in the binding material-providing step and the sheet S, formed through the binding material-providing step, provided with the binding material in the binding material-providing step may be disintegrated.

### 3. Modification of Fiber Assembly-Forming Method

Next, a modification of the fiber assembly-forming method is described with reference to a drawing. FIG. 5 is a flowchart illustrating the modification. Hereinafter, in the modification, what is different from the fiber assembly-forming method is described and what is common to the fiber assembly-forming method is not described.

As shown in FIG. 2, the fiber assembly-forming method includes the binding material-providing step (Step S11). As shown in FIG. 5, the modification includes a material-preparing step (Step S21) of preparing material containing fibers and a binding material boding the fibers to each other.

As shown in FIG. 5, the modification includes the material-preparing step (Step S21), a disintegration step (Step S22) of forming disintegrated matter by disintegrating the material, a deposition step (Step S23) of depositing the disintegrated matter, and a heating step (Step S24) of heating the deposited disintegrated matter.

In the material-preparing step (Step S21), the material contains, for example, waste paper and a resinous substance made of the binding material. The resinous substance may be composed of a thermoplastic resin or a thermosetting resin or may be composed of the thermoplastic resin and the thermosetting resin.

The shape of the resinous substance is not particularly limited and is, for example, a sheet shape (single sheet shape), a strip shape formed by fragmenting a single sheet, a dice shape, or a spherical shape. The resinous substance is preferably a sheet-shaped resin sheet. When the resinous substance is such a resin sheet, the resinous substance can be supplied by attaching a sheet-feeding stacker for supplying the resinous substance to the supply section 10 of the fiber assembly-forming apparatus 100. In the material-preparing step, the same number of resin sheets as that of sheets of waste paper may be prepared. In a case where the modification is performed using the fiber assembly-forming apparatus 100, the provision section 110 need not be driven. Alternatively, the provision section 110 need not be used.

In the material-preparing step, the material is prepared such that the binding material accounts for 6.0% by mass or more of the fibers. In a case where, for example, waste paper and the resinous substance are prepared as material, supposing that the mass of fibers contained in the waste paper is 100, the sum of the mass of resin contained in the waste paper and the mass of the resinous substance is 6.0 or more. In the material-preparing step, the material is preferably prepared such that the binding material accounts for 9.0% by mass or more of the fibers. When the material is such that the binding material accounts for 6.0% by mass or more of the fibers, the sheet S can be formed so as to have high paper strength.

The disintegration step (Step S22) is substantially the same as the above-mentioned disintegration step (Step S12). The deposition step (Step S23) is substantially the same as the above-mentioned deposition step (Step S13). The heating step (Step S24) is substantially the same as the above-mentioned heating step (Step S14).

The modification has, for example, effects below.

In the modification, as well as the fiber assembly-forming method, the sheet S can be formed so as to variation in paper strength.

In the modification, no provision step is performed unlike the fiber assembly-forming method; hence, for example, the provision section 110 of the fiber assembly-forming apparatus 100 can be omitted. Therefore, the downsizing of the fiber assembly-forming apparatus 100 is possible.

In the modification, in the material-preparing step, the material may contain a resinous substance made of the binding material. Therefore, liquid containing the binding material need not be applied; hence, a drying step subsequent to the application of the liquid can be omitted.

Furthermore, a sheet-shaped resinous substance is easy in stock control and has good operation efficiency. Furthermore, the type of the resinous substance can be selected without being restricted by crushability, powder characteristics such as fluidity, dispersibility, dischargeability, storage stability, or compatibility.

Furthermore, a plurality of different functional agents can be provided to the fibers depending on purposes using a resinous substance made of resins with different glass transition temperatures or a resinous substance containing a flame retardant, an antistatic agent, an ultraviolet absorber, a perfume, and the like; hence, functional customization is easy.

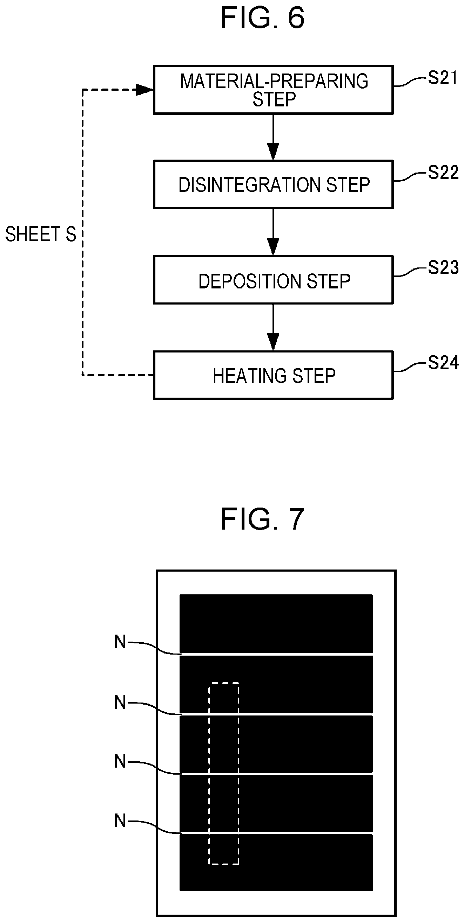

In the modification, if the material can be prepared in the material-preparing step such that the binding material accounts for 6.0% by mass or more of the fibers, the sheet S, which is formed through the heating step, may be prepared as material in addition to the waste paper and the resinous substance as shown in FIG. 6.

In the modification, if the material can be prepared in the material-preparing step such that the binding material accounts for 6.0% by mass or more of the fibers, the waste paper and the sheet S may be prepared as material without preparing the resinous substance.

### 4. Example and Comparative Example

### 4.1. Preparation of Samples

### 4.1.1. Example 1

Liquid was provided to recycled paper, G80 (a basis weight of 64 g/m²), available from Mitsubishi Paper Mills, Ltd. using an inkjet printer, EW-M770T, available from Seiko Epson Corporation, whereby a feedstock was prepared. Components of the liquid were as described below.

**Table 1**

| Components of liquid | Mass percent |
|---|---|
| Polyurethane | 15 |
| PG | 10 |
| E1010 | 1 |
| Water | Balance |
| Total | 100 |

Polyurethane used was SUPERFLEX 130 available from Dai-ichi Kogyo Seiyaku Co., Ltd. Polyurethane is a binding material bonding fibers to each other. In Table 1, "PG" is polypropylene glycol and "E1010" is Olfine E1010 available from Nissin Chemical Industry Co., Ltd.

Next, a sheet with a basis weight of 70 g/m² was prepared using a papermaking machine, PaperLab A8000, available from Seiko Epson Corporation and the feedstock coated with the liquid. The content of the binding material with respect to fibers in the sheet was 9.0% by mass. In PaperLab A8000, no binding material was provided to the feedstock. That is, in Example 1, after liquid containing the binding material was applied, disintegration was performed.

### 4.1.2. Comparative Example 1

A web was prepared using G80 as a feedstock without providing the binding material in PaperLab A8000. Next, the liquid shown in FIG. 1 was applied to the web using EW-M770T. Thereafter, the web was pressurized with a pressurizing portion and was heated with a heating portion, whereby a sheet with a basis weight of 70 g/m² was prepared. That is, in Comparative Example 1, after disintegration was performed, liquid containing the binding material was applied.

### 4.2. Evaluation Method

### 4.2.1. First Evaluation

Printing with EW-M770T was performed in such a state that four nozzles were clogged. As shown in FIG. 7, in Comparative Example 1, dropouts N due to dot loss were observed on the prepared sheet. In Example 1, since disintegration was performed after printing, no dropout was observed on the prepared sheet. Each of the prepared sheets was cut to a rectangle with a width of 20 mm. In Comparative Example 1, the sheet was cut such that the dropouts N were contained. Referring to FIG. 7, the sheet cut in Comparative Example 1 is drawn with a dashed line. The sheets were measured for specific tensile strength in a longitudinal direction by a method specified in JIS P 8113:2006 using a tensile tester, AGS-X-500N, available from Shimadzu Corporation.

Evaluation standards for specific tensile strength were as described below.
A: A specific tensile strength of 20 Nm/g or more.
B: A specific tensile strength of less than 20 Nm/g.

### 4.2.2. Second Evaluation

Printing with EW-M770T was repeatedly performed in such a state that four nozzles were clogged. Subsequently, the uneven application of the liquid was visually checked.

Evaluation standards for uneven application were as described below.
A: Uneven application incapable of being visually observed.
B: Uneven application capable of being visually observed.

### 4.3. Evaluation Results

Evaluation results of specific tensile strength and uneven application were as shown in Table 2.

**Table 2**

| | Example 1 | Comparative Example 1 |
|---|---|---|
| First evaluation (specific tensile strength) | A (29 Nm/g) | B (19 Nm/g) |
| Second evaluation (uneven application) | A | B |

In Example 1, since disintegration was performed after printing, the prepared sheet had no dropouts due to dot loss. Therefore, Example 1 showed a specific tensile strength higher than that in Comparative Example 1. Furthermore, in Example 1, since disintegration was performed after printing, the binding material was homogenized and no uneven application was observed, even though printing was repeatedly performed in such a state that the four nozzles were clogged. These evaluations showed that a sheet with little variation in paper strength could be formed by applying liquid containing the binding material before performing disintegration.

## Claims

1. A fiber assembly-forming method used in sheet forming comprising:
providing a first feedstock containing fibers with a binding material bonding the fibers to each other (S11);
forming disintegrated matter by disintegrating the first feedstock provided with the binding material (S12);
depositing the disintegrated matter (S13); and
heating the deposited disintegrated matter (S14).

2. The fiber assembly-forming method according to claim 1, wherein in the provision of the binding material, the binding material is applied to a surface of the first feedstock.

3. The fiber assembly-forming method according to claim 1, wherein in the formation of the disintegrated matter, the first feedstock provided with the binding material and a second feedstock, which is a sheet (S) formed in the heating step, are disintegrated.

4. A fiber assembly-forming method according to claim 1, wherein after the providing step the binding material accounts for 6.0% by mass or more of the fibers in the first feedstock.

5. The fiber assembly-forming method according to claim 4, wherein the first feedstock contains a resinous substance made of the binding material.

6. The fiber assembly-forming method according to claim 1, wherein the binding material is a thermoplastic resin or a thermosetting resin and the glass transition temperature of the binding material is 45 °C or higher.

7. A fiber assembly-forming apparatus (100) used in sheet forming comprising:
a provision section (110) providing a first feedstock containing fibers with a binding material bonding the fibers to each other;
a disintegration section (20) disintegrating the first feedstock provided with the binding material to form disintegrated matter;
a deposition section (60) depositing the disintegrated matter; and
a heating portion (84) heating the deposited disintegrated matter.

8. The fiber assembly-forming apparatus (100) according to claim 7, wherein the provision section (110) includes a roller applying the binding material to the first feedstock.

9. The fiber assembly-forming apparatus (100) according to claim 7, wherein the provision section (110) includes a spray discharging the binding material to the first feedstock.

10. The fiber assembly-forming apparatus (100) according to claim 7, wherein the disintegration section (20) disintegrates the first feedstock provided with the binding material and a second feedstock, which is a sheet (S) formed by the heating portion.

11. The fiber assembly-forming apparatus (100) according to claim 7, wherein the binding material is a thermoplastic resin or a thermosetting resin and the glass transition temperature of the binding material is 45 °C or higher.

## Patentansprüche

1. Verfahren zum Herstellen einer Faseranordnung, die bei einer Blattherstellung verwendet wird, umfassend:
Bereitstellen eines ersten Ausgangsmaterials, das Fasern mit einem Bindungsmaterial enthält, das die Fasern aneinander bindet (S11);
Bilden eines aufgetrennten Stoffs durch Auftrennen des ersten Ausgangsmaterials, das mit dem Bindungsmaterial bereitgestellt ist (S12);
Abscheiden des aufgetrennten Stoffs (S13);
Erhitzen des abgeschiedenen aufgetrennten Stoffs (S14).

2. Verfahren zum Herstellen einer Faseranordnung nach Anspruch 1, wobei beim Bereitstellen des Bindungsmaterials das Bindungsmaterial auf eine Oberfläche des ersten Ausgangsmaterials aufgebracht wird.

3. Verfahren zum Herstellen einer Faseranordnung nach Anspruch 1, wobei beim Bilden des aufgetrennten Stoffs das erste Ausgangsmaterial, das mit dem Bindungsmaterial bereitgestellt ist, und ein zweites Ausgangsmaterial, das ein Blatt (S) ist, das in dem Erhitzungsschritt gebildet wird, aufgetrennt werden.

4. Verfahren zum Herstellen einer Faseranordnung nach Anspruch 1, wobei nach dem Bereitstellungsschritt das Bindungsmaterial 6,0 Masseprozent oder mehr der Fasern in dem ersten Ausgangsmaterial ausmacht.

5. Verfahren zum Herstellen einer Faseranordnung nach Anspruch 4, wobei das erste Ausgangsmaterial eine harzhaltige Substanz enthält, die aus dem Bindungsmaterial hergestellt ist.

6. Verfahren zum Herstellen einer Faseranordnung nach Anspruch 1, wobei das Bindungsmaterial ein thermoplastisches Harz oder ein wärmehärtendes Harz ist und die Glasübergangstemperatur des Bindungsmaterials 45 °C oder höher ist.

7. Vorrichtung (100) zum Herstellen einer Faseranordnung, die bei einer Blattherstellung verwendet wird, umfassend:
einen Bereitstellungsabschnitt (110) zum Bereitstellen eines ersten Ausgangsmaterials, das Fasern mit einem Bindungsmaterial enthält, das die Fasern aneinander bindet;
einen Auftrennungsabschnitt (20), der das erste Ausgangsmaterial, das mit dem Bindungsmaterial bereitgestellt ist, auftrennt, um einen aufgetrennten Stoff zu bilden;
einen Abscheidungsabschnitt (60) zum Abscheiden des aufgetrennten Stoffs; und
einen Erhitzungsabschnitt (84) zum Erhitzen des abgeschiedenen aufgetrennten Stoffs.

8. Vorrichtung (100) zum Herstellen einer Faseranordnung nach Anspruch 7, wobei der Bereitstellungsabschnitt (110) eine Walze beinhaltet, die das Bindungsmaterial auf das erste Ausgangsmaterial aufbringt.

9. Vorrichtung (100) zum Herstellen einer Faseranordnung nach Anspruch 7, wobei der Bereitstellungsabschnitt (110) einen Spray beinhaltet, der das Bindungsmaterial auf das erste Ausgangsmaterial abgibt.

10. Vorrichtung (100) zum Herstellen einer Faseranordnung nach Anspruch 7, wobei der Auftrennungsabschnitt (20) das erste Ausgangsmaterial, das mit dem Bindungsmaterial bereitgestellt ist, und ein zweites Ausgangsmaterial, das ein Blatt (S) ist, das durch den Erhitzungsabschnitt gebildet wird, auftrennt.

11. Vorrichtung (100) zum Herstellen einer Faseranordnung nach Anspruch 7, wobei das Bindungsmaterial ein thermoplastisches Harz oder ein wärmehärtendes Harz ist und die Glasübergangstemperatur des Bindungsmaterials 45 °C oder höher ist.

## Revendications

1. Procédé de formation d'un assemblage de fibres mis en œuvre dans la formation de feuilles, comprenant :
la mise à disposition d'une première matière première contenant des fibres avec un matériau de liaison liant les fibres les unes aux autres (S11) ;
la formation d'une matière désintégrée par désintégration de la première matière première avec le matériau de liaison (S12) ;
le dépôt de la matière désintégrée (S13) ;
le chauffage de la matière désintégrée déposée (S14).

2. Procédé de formation d'un assemblage de fibres selon la revendication 1, dans lequel, dans la mise à disposition du matériau de liaison, le matériau de liaison est appliqué sur une surface de la première matière première.

3. Procédé de formation d'un assemblage de fibres selon la revendication 1, dans lequel, dans la formation de la matière désintégrée, la première matière première dotée du matériau de liaison et une deuxième matière première, laquelle est une feuille (S) formée dans l'étape de chauffage, sont désintégrées.

4. Procédé de formation d'un assemblage de fibres selon la revendication 1, dans lequel, après l'étape de mise à disposition, le matériau de liaison représente 6,0 % en masse ou plus des fibres dans la première matière première.

5. Procédé de formation d'un assemblage de fibres selon la revendication 4, dans lequel la première matière première contient une substance résineuse constituée du matériau de liaison.

6. Procédé de formation d'un assemblage de fibres selon la revendication 1, dans lequel le matériau de liaison est une résine thermoplastique ou une résine thermodurcissable et la température de transition vitreuse du matériau de liaison est de 45 °C ou plus.

7. Dispositif de formation d'un assemblage de fibres (100) utilisé dans la formation de feuilles, comprenant :
une section de mise à disposition (110) mettant à disposition une première matière première contenant des fibres avec un matériau de liaison liant les fibres les unes aux autres ;
une section de désintégration (20) désintégrant la première matière première dotée du matériau de liaison pour former une matière désintégrée ;
une section de dépôt (60) déposant la matière désintégrée ; et
une partie de chauffage (84) chauffant la matière désintégrée déposée.

8. Dispositif de formation d'un assemblage de fibres (100) selon la revendication 7, dans lequel la section de mise à disposition (110) inclut un rouleau appliquant le matériau de liaison sur la première matière première.

9. Dispositif de formation d'un assemblage de fibres (100) selon la revendication 7, dans lequel la section de mise à disposition (110) inclut un pulvérisateur déchargeant le matériau de liaison sur la première matière première.

10. Dispositif de formation d'un assemblage de fibres (100) selon la revendication 7, dans lequel la section de désintégration (20) désintègre la première matière première dotée du matériau de liaison et une deuxième matière première, laquelle est une feuille (S) formée par la partie de chauffage.

11. Dispositif de formation d'un assemblage de fibres (100) selon la revendication 7, dans lequel le matériau de liaison est une résine thermoplastique ou une résine thermodurcissable et la température de transition vitreuse du matériau de liaison est de 45 °C ou plus.
